# EUROPÄISCHE PATENTSCHRIFT

(11) **EP 0 738 195 B1**
(45) Veröffentlichungstag und Bekanntmachung des Hinweises auf die Patenterteilung: **06.08.1997**
(21) Anmeldenummer: 95906290.2
(22) Anmeldetag: 04.01.1995
(51) Int. Cl.: B23K 1/19

(54) **VERFAHREN UND ANLAGE ZUM VERBINDEN VON ALUMINIUMTEILEN DURCH LÖTEN, ANWENDUNGEN DES VERFAHRENS UND ANLAGE ZUR DURCHFÜHRUNG DES VERFAHRENS**
PROCESS AND PLANT FOR JOINING ALUMINIUM PARTS BY SOLDERING, USES OF THE PROCESS AND PLANT FOR IMPLEMENTING THE PROCESS
PROCEDE ET INSTALLATION POUR ASSEMBLER DES PIECES D'ALUMINIUM PAR SOUDAGE, APPLICATIONS DU PROCEDE ET INSTALLATION POUR L'EXECUTION DU PROCEDE

(30) Priorität: 07.01.1994 DE 4400333; 06.10.1994 DE 4435676
(43) Veröffentlichungstag der Anmeldung: 23.10.1996
(73) Patentinhaber: Krupp VDM GmbH, 58791 Werdohl (DE)
(72) Erfinder: BITTER, Dieter, D-57413 Finnentrop (DE)
(74) Vertreter: Cohausz & Florack Patentanwälte
(86) Internationale Anmeldenummer: EP9500015
(87) Internationale Veröffentlichungsnummer: WO9518695

(56) Entgegenhaltungen:
- EP-A- 0 209 650
- EP-A- 0 422 612
- FR-A- 2 317 994
- FR-A- 2 579 501

## Beschreibung

Die Erfindung betrifft ein Verfahren nach dem Oberbegriff des Anspruchs 1. Die Erfindung befaßt sich weiterhin mit besonderen Anwendungen des Verfahrens und mit einer Anlage zur Durchführung des Verfahrens.

Die Gattung der Erfindung betrifft somit das allgemein bekannte, regelmäßig ausgeübte Lötverfahren, das, wie dem Fachmann geläufig, auch meist unter zusätzlicher Verwendung eines geeigneten Flußmittels praktiziert wird. Ein solches Löten erfordert beim Einsatz eines Lotes, das für sich und/oder in Verbindung mit dem Flußmittel einen nahe dem bei etwa 600 °C liegenden Schmelzpunkt von Aluminium hat, eine sorgfältige Temperaturführung, um ein Aufschmelzen der zu verbindenden Aluminiumteile zu verhindern. Ein Aluminiumbasislot, beispielsweise AlSi13 (Aluminium mit 13 % Masseanteil Silizium) als Zusatzwerkstoff wird in Verbindung mit einem speziell auf das Al/Al-Löten abgestimmten Flußmittel ein Lötintervall von 590 bis 610 °C haben, also im Temperaturbereich von 590 bis 610 °C aufschmelzen und dann in den Lötspalt kriechen.

Wenn man auch verbindungsspezifisch empirisch ermitteln kann, daß der Lötbereich beispielsweise durchschnittlich 6 Sekunden erwärmt werden muß, um den Lötvorgang zur Auslösung zu bringen, so bleiben doch einige Lötvorgänge einer Serie, bei denen die Erwärmung etwas länger oder etwas kürzer hätte ausfallen müssen. Die so verbleibenden Fehllötungen, nämlich eine unvollständige Verbindung oder alternativ praktisch ein Zerstören des Verbindungsbereiches durch Aufschmelzen, wirken sich sehr nachteilig auf die Wirtschaftlichkeit der Lötung und die Zuverlässigkeit einer Automatisierung aus.

Die EP-A-209 650 offenbart hierzu ein Verfahren und eine Vorrichtung zum Verbinden sich überlappender, zwischen sich einen Lötspalt bildender Teile. Die Steuerung des Lötvorgangs erfolgt dadurch, daß das Wegschmelzen des Lotes beobachtet und daß über Detektionseinrichtungen in ein Signal umgeformt wird. Nachteilig bei diesem Verfahren ist, daß die zum Wegschmelzen des Lotes nötige Temperatur bereits über eine merkliche Zeitspanne im Lotspalt herrschte, so daß ein Regelungseingriff erst verspätet eingeleitet wird.

Aufgabe der Erfindung ist es, den gattungsgemäßen Lötprozeß unter Vermeidung der geschilderten Unzulänglichkeiten mit dem Ziel hoher Betriebssicherheit zu automatisieren, wobei auch enventuelle, wenn auch nur vorübergehende Veränderungen in der Intensität der Erwärmung bewältigbar sein sollen.

Erfindungsgemäß wird daher vorgeschlagen, daß die Erwärmung beeinflußt wird, sobald durch das Wegschmelzen des Flußmittels eine markante Veränderung der auf die Veränderung der Farbe bzw. Frequenz des an der Lotstelle durch die Erwärmung der im Flußmittel vorhandenen Elemente ausgestrahlten und über die Videokamera aufgenommenen Lichtes reagierenden Auswertung des digitalisierten Bildes eingetreten ist.

Hierdurch wird der Vorteil erreicht, daß das niedrig schmelzende Flußmittel, welches für das Aufschließen der Oxidationsoberfläche und damit zur Reinigung der zu verbindenden Teile erforderlich ist, beobachtet und Veränderungen desselben in einen frühzeitigen Regeleingriff münden.

Die markante Veränderung des digitalisierten Bildes erfolgt dabei durch eine auf eine Veränderung der Farbe bzw. Frequenz des an der Lotstelle durch die Erwärmung ausgestrahlten und über die Video-Kamera aufgenommenen Lichtes reagierenden Auswertung. Hierdurch kann auf relativ einfache Weise eine besonders feine und genau auf den Prozeß abgestimmte Regelung erfolgen. Während des Lötvorganges beinhaltet nämlich die Lotstelle bzw. die Lötflamme, abhängig von den Zuständen innerhalb der erwärmten Bereiche, fein abgestufte Frequenzänderungen und damit Farbänderungen im ausgestrahlten Licht.

Da das Flußmittel das niedrig schmelzende Element ist, kann über seine Beobachtung und insbesondere über die bei der Erwärmung oder auch Verbrennung seiner Elemente entstehenden ausgesandten Farben oder Lichtfrequenzen bereits eine Beeinflussung des Lötvorganges unterhalb von kritischen Temperaturen erfolgen.

So beginnt der Schmelzvorgang bei einem der bekannten Flußmittel beispielsweise bei etwa 575 °C. In geschmolzenem Zustand erreicht das Flußmittel seine höchste Aktivität und Wirksamkeit, so daß eine Einwirkzeit von ca. 2 s erforderlich wird, bevor eine weitere Erwärmung auf ca. 630 °C auch das Lot schmelzen läßt und letztendlich die Verbindung initiiert.

Wesentlich und wichtig ist jedoch dabei, daß das Aluminium selbst nicht schmilzt, weil dann die Lötung in eine Schweißung mit den damit verbundenen Nachteilen übergehen würde.

Insofern ist es besonders vorteilhaft, wenn man bereits zum Beginn des Schmelzens des Flußmittels die das Verfahren regelnden Parameter beeinflussen, eine Überhitzung verhindern und eine Einwirkzeit kontrollieren kann. Üblicherweise geschieht dies über eine Mengenänderung in der Gaszufuhr. Jegliche andere Beeinflussung, beispielsweise durch eine Änderung des Abstandes zwischen Flamme und Lötstelle oder über eine Änderung der Gaszusammensetzung, ist ebenfalls möglich.

Das erfindungsgemäße Verfahren eignet sich besonders zur Herstellung von einer Lötverbindung zwischen ineinandergesteckten Aluminiumrohren. Dabei wird der Zusatzwerkstoff in Form eines Lotringes auf das eine, regelmäßig das innere Rohrende, aufgesteckt und sitzt auf dem äußeren Rohrende auf.

Bei der Verdampferfertigung für Kühlgeräte, deren Anschlußstutzen durch die Lötverbindung an Leitungen des Kühlmittelkreislaufes angeschlossen werden muß, bringt das erfindungsgemäße Verfahren erhebliche Vorteile. Fehllötungen führen nämlich häufig dazu, daß der entsprechende Verdampfer aus der Fertigungslinie genommen und verschrottet werden muß.

Eine Anlage zur Ausübung des erfindungsgemäßen Verfahrens umfaßt Haltevorrichtungen zum überlappenden Halten der zu verbindenden Aluminiumteile und mit mindestens einer, auf den Überlappungsbereich gerichteten, über eine Stellvorrichtung zu- und abschaltbaren Wärmequelle und ist gekennzeichnet durch
- einen auf den Bereich des sichtbaren Ansatzes des Lötspaltes und des deponierten Zusatzwerkstoffes gerichteten berührungslos arbeitenden Sensor,
- eine elektronische Regeleinrichtung, an die der Sensor und die Stellvorrichtung angeschlossen sind, wobei die Regeleinrichtung dazu ausgelegt ist, die Charakteristik einer ersten Impulsfolge des Sensors zu speichern, eine weitere Impulsfolge des Sensors mit der gespeicherten Impulsfolge zu vergleichen und ein Stellsignal der Stellvorrichtung abzugeben, wenn eine weitere Impulsfolge von einer ersten Impulsfolge erheblich abgewichen ist.

Es ist dabei nicht erforderlich, die Gesamtheit aller Impulse einer Impulsfolge zu speichern, vielmehr wird über entsprechende Aufbereitungsprogramme das für das Vorhandensein des Schweißzusatzwerkstoffdepots Typische herausgearbeitet und schließlich der Wegfall dieser typischen Merkmale zur Auslösung des Stellimpulses herangezogen.

Anhand der Zeichnung wird die Erfindung nachfolgend erläutert.
- Fig. 1: zeigt eine Anlage zum Verlöten zweier Bleche aus Aluminium;
- Fig. 2: zeigt eine Anlage zum Verlöten eines Rohres mit einer Platine;
- Fig. 3: zeigt ein den Lötvorgang beschreibendes Zeit-Temperatur-Diagramm;

Gleiche Teile sind in den Figuren mit denselben Bezugszeichen versehen.

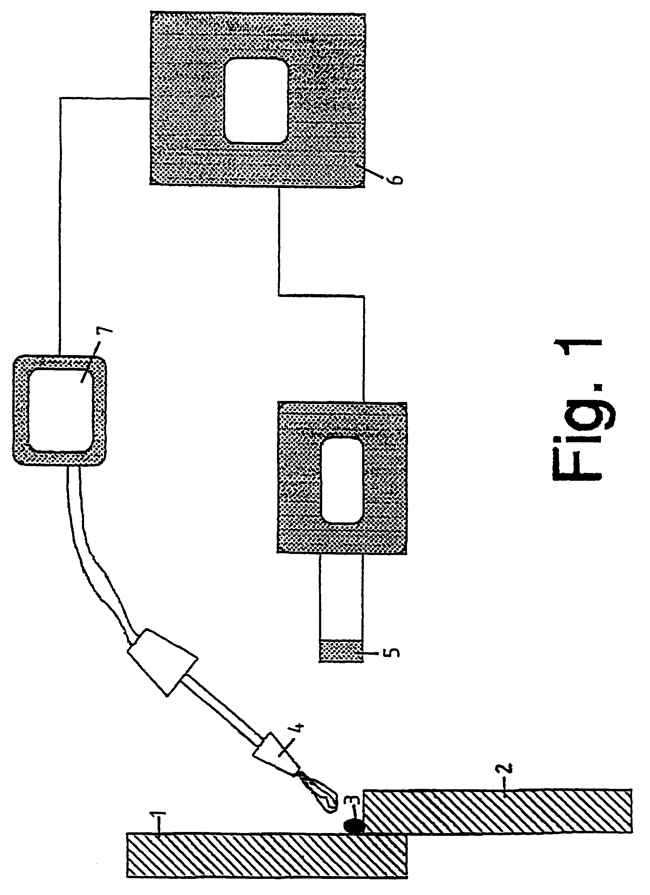

Gemäß Fig. 1 ist an dem sichtbaren Spalt zweier einander teilweise überlappender Bleche 1, 2 ein Zusatzwerkstoff 3 und Flußmittel deponiert. Mittels eines Brenners 4 wird das Flußmittel und danach der Zusatzwerkstoff aufgeschmolzen. Eine Video-Kamera 5 als Sensor überwacht den Aufschmelzvorgang. Wenn das Flußmittel aufschmilzt, wird die von der Video-Kamera 5 erfaßte Farb- bzw. Frequenzänderung an der Lotstelle erfaßt und in der Regeleinrichtung 6 wird ein Steuerimpuls ausgelöst, der eine Stellvorrichtung 7 betätigt, die die Gaszufuhr zu dem Brenner 4 unterbricht.

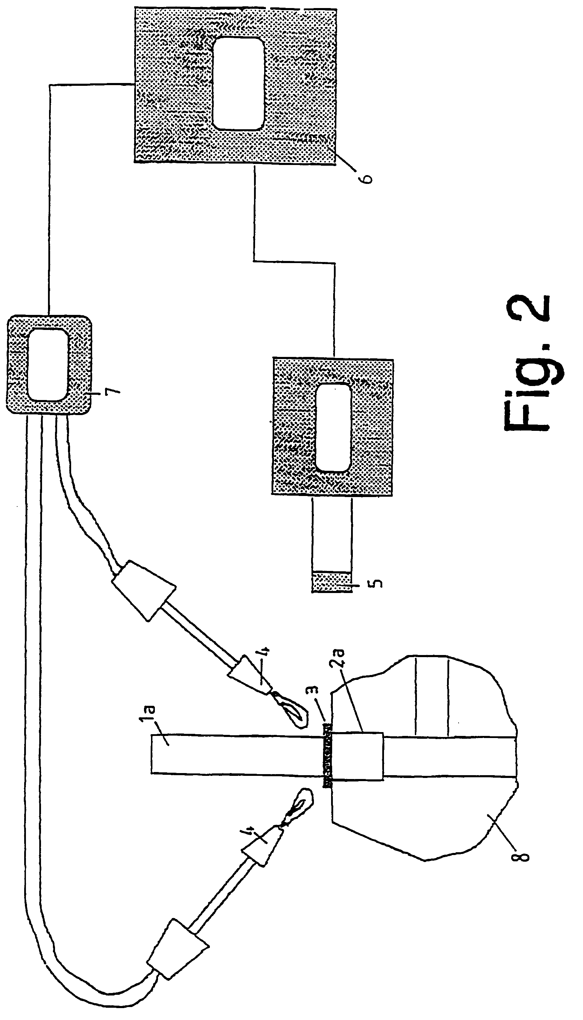

Mit der Anlage gemäß Fig. 2 wird ein Rohr 1a an einer Platine 8 über eine an dieser angebrachte Muffe 2a mittels eines ringförmig an den sichtbaren Spalt zwischen dem Rohr 1a und der Muffe 2a gelegten Zusatzwerkstoffs 3 in gleicher Weise, hier aber mittels zweier Brenner 4, im übrigen aber wie bei der Ausführung gemäß Fig. 1 verlötet.

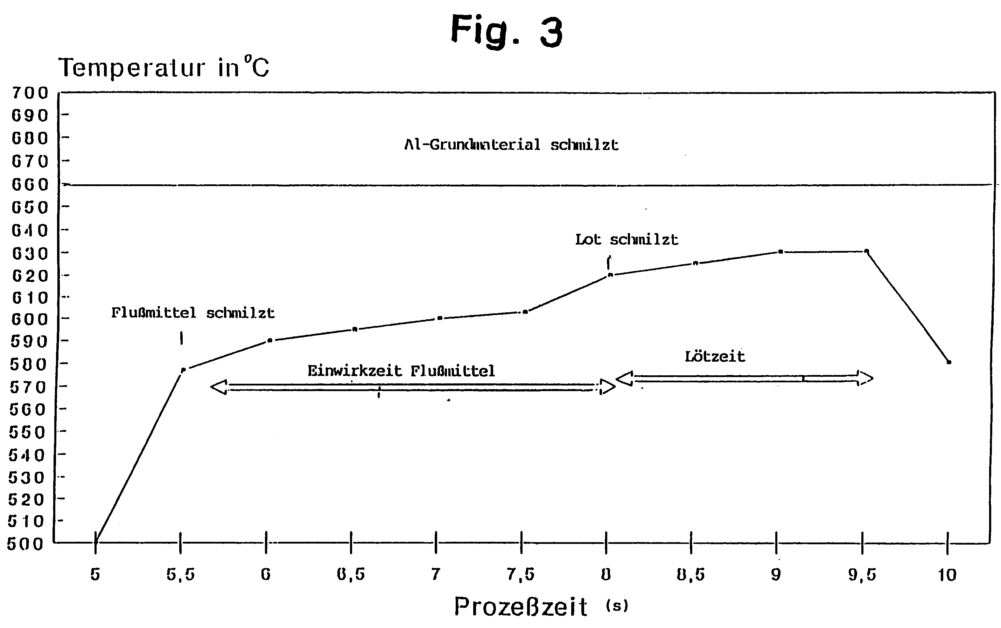

Das Diagramm in Fig. 3 zeigt den Lötprozeß mit der erfindungsgemäßen Verfahrensregelung in einer über der Prozeßzeit aufgetragenen Temperaturkurve. Deutlich erkennbar wird hier der Zeitpunkt, an dem das Flußmittel schmilzt, und die darauf folgende nur mit einer leichten Temperaturerhöhung einhergehende Einwirkzeit. Erst am Ende der Einwirkzeit wird die Temperatur weiter durch Energiezufuhr erhöht, wonach das Lot schmilzt und die beiden Teile verbindet. Bei der Maximaltemperatur von 628 °C fällt dann nach einer Lötzeit von 9,5 s die Temperatur durch Ausschalten der Flamme ab.

Im Zeitverlauf sieht man deutlich, daß der durch den Farbumschlag ermittelte Zeitpunkt des beginnenden Schmelzens des Flußmittels genügend Zeit läßt, Regelungen durchzuführen und die Energiezufuhr so einzustellen, daß eine Überhitzung mit Sicherheit verhindert wird.

## Patentansprüche

1. Verfahren zum Verbinden sich überlappender, zwischen sich einen Lötspalt bildenden Aluminiumteilen (1, 2) durch Löten mit einem für eine Al/Al-Lötung geeigneten Lot als Zusatzwerkstoff (3) und einem Flußmittel, wobei zunächst nahe dem sichtbaren Ansatz des Lötspaltes dem Lotbedarf mengenmäßig entsprechender Zusatzwerkstoff (3) und Flußmittel deponiert werden und anschließend die Aluminiumteile (1, 2) so lange erwärmt werden, bis der Zusatzwerkstoff (3) geschmolzen und in den Lötspalt gekrochen ist, worauf die Erwärmung beendet wird, wobei ein Bereich des Lötspaltes und des deponierten Zusatzwerkstoffes (3) und Flußmittels während des Erwärmens kontinuierlich und berührlungslos über eine Video-Kamera (5) als Sensor erfaßt und das erfaßte Bild digitalisiert wird,
**dadurch gekennzeichnet**, daß die Erwärmung beeinflußt wird, sobald durch das Wegschmelzen des Flußmittels eine markante Veränderung der auf die Veränderung der Farbe bzw. Frequenz des an der Lotstelle durch die Erwärmung der im Flußmittel vorhandenen Elemente ausgestrahlten und über die Video-Kamera (5) aufgenommenen Lichtes reagierenden Auswertung des digitalisierten Bildes eingetreten ist.

2. Anwendung des Verfahrens nach Anspruch 1 zur Herstellung einer Lötverbindung zwischen ineinandergesteckten Aluminiumrohren (1a, 2a), wobei der Zusatzwerkstoff (3) in Form eines Lotringes auf das eine Rohrende (1a) aufgesteckt wird.

3. Anwendung des Verfahrens nach einem der Ansprüche 1 oder 2 bei der Einbindung von Verdampfern von Kühlschränken in den Kühlmittelkreislauf für den Zweck nach Anspruch 2.

4. Anlage zur Ausübung des Verfahrens nach Anspruch 1 mit Haltevorrichtungen zum überlappenden Halten der zu verbindenden Aluminiumteile (1, 2) und mit mindestens einer auf den Überlappungsbereich gerichteten, über eine Stellvorrichtung (7) zu- und abschaltbaren Wärmequelle (4), **gekennzeichnet** durch
- eine auf den Lötspalt und den deponierten Zusatzwerkstoff (3) gerichtete Video-Kamera (5) als Sensor
- eine elektronische Regeleinrichtung (6), an die der Sensor und die Stellvorrichtung (7) angeschlossen sind, wobei die Regeleinrichtung (6) dazu ausgelegt ist, die Charakteristik einer ersten Impulsfolge des Sensors zu speichern, eine weitere Impulsfolge des Sensors mit der gespeicherten Impulsfolge zu vergleichen und ein Stellsignal der Stellvorrichtung (7) abzugeben, wenn die weitere Impulsfolge von der ersten Impulsfolge abgewichen ist.

## Claims

1. A process for joining overlapping aluminium parts (1, 2) forming a soldering gap therebetween by soldering using as a filler metal (3) a solder suitable for Al/Al soldering and a fluxing agent, wherein filler metal (3) and fluxing agent are first deposited in the quantities required adjacent the visible start of the soldering gap and then the aluminium parts (1, 2) are heated until the filler metal (3) has melted and crept into the soldering gap, whereafter heating is terminated, and wherein a zone of the soldering gap and of the deposed filler metal (3) and fluxing agent is continuously scanned in a contact-free manner by a video camera (5) acting as a sensor and the image obtained is digitalized,
characterized in that action is taken on the heating as soon as the melting away of the fluxing agent causes a marked change in the digitalized image evaluation reacting to the change in the colour or frequency of the light radiated at the soldering place by the heating of the elements present in the fluxing agent and recorded via the video camera (5).

2. Use of the process according to claim 1 for the production of a soldered connection between aluminium tubes (1a, 2a) fitted into one another, wherein the filler metal (3) is applied in the form of a ring of solder into one tube end (1a).

3. Use of the process according to one of claims 1 or 2 in the integration of evaporators of refrigerators in the coolant circuit for the purpose set forth in claim 2.

4. An installation for the performance of the process according to claim 1, having retaining devices for the overlapping retention of the aluminium parts (1, 2) to be connected and at least one heat source (4) which is directed at the zone of overlap and can be switched on and off via an adjusting device (7), characterized by
- a video camera (5) acting as a sensor directed at the soldering gap and the deposited filler metal (3),
- an electronic control unit (7) to which the sensor and the adjusting device (7) are connected, the control unit (6) being designed to store the characteristics of a first sequence of pulses of the sensor, to compare a further sequence of pulses of the sensor with the stored sequence of pulses, and to deliver an adjusting signal to the adjusting device (7) if the further sequence of pulses differs from the first sequence of pulses.

## Revendications

1. Procédé pour assembler des pièces d'aluminium (1,2) qui se recouvrent et délimitent entre elles une fente de brasage, par brasage au moyen d'un métal d'apport de brasage constituant un matériau d'addition (3) adapté pour un brasage Al/Al et d'un fondant, dans lequel on dépose le matériau d'addition (3) et le fondant en quantité correspondant aux besoins du brasage sur l'épaulement visible de la fente de brasage, puis on chauffe les pièces d'aluminium (1,2) jusqu'à ce que le matériau d'addition (3) soit fondu et fluant dans la fente de brasage, après quoi on met fin au chauffage, une zone de la fente de brasage et du matériau d'addition (3) ainsi que du fondant déposé étant contrôlée pendant le chauffage d'une manière continue et sans contact par l'intermédiaire de caméra vidéo (5) constituant un détecteur et l'image obtenue est numérisée, caractérisé en ce qu'on modifie le chauffage dès que l'on constate, du fait de la disparition du fondant, un changement marquant dans l'exploitation de l'image numérisée, l'exploitation réagissant au changement de la couleur ou de la fréquence de la lumière émise en raison, du chauffage, par des éléments présents dans le fondant.

2. Utilisation du procédé selon la revendication 1, pour la fabrication d'une liaison par brasage entre deux tubes d'aluminium (1a, 2a), dans lequel le matériau d'addition (3) est déposé sous la forme d'un anneau de brasage sur l'une (1a) des extrémités des tubes.

3. Utilisation du procédé selon l'une des revendications 1 et 2, pour la liaison entre des évaporateurs de réfrigérateurs dans leur circuit de refroidissement dans le but de la revendication 2.

4. Installation pour la mise en oeuvre du procédé selon la revendication 1, comportant des dispositifs de maintien pour le maintien des pièces d'aluminium (1,2) se recouvrement et qui doivent être reliées, et au moins une source de chaleur (4) dirigée sur la zone de recouvrement au moyen d'un dispositif de réglage (7) pouvant être mis en service et retiré, caractérisé par le fait qu'il comporte :
- une caméra vidéo (5) orientée sur la fente de brasage et sur le matériau d'addition (3) déposé et constituant un détecteur,
- un dispositif de réglage électronique (6) auquel sont reliés le détecteur et le dispositif de réglage (7), et ce dispositif de réglage (6) est agencé afin d'enregistrer la caractéristique d'une première série d'impulsions du détecteur, puis de comparer une autre série d'impulsions du détecteur avec la série d'impulsions enregistrées et de délivrer un signal de réglage au dispositif de réglage (7), lorsque la seconde série d'impulsions s'écarte de la première série d'impulsions.
